Europäisches Patentamt

European Patent Office

Office européen des brevets

(11) Publication number: **0 078 320**
**B1**

## EUROPEAN PATENT SPECIFICATION

(45) Date of publication of patent specification: **06.07.88**

(21) Application number: **82901939.7**

(22) Date of filing: **06.05.82**

(86) International application number:
**PCT/US82/00597**

(87) International publication number:
**WO 82/04132 25.11.82 Gazette 82/28**

(51) Int. Cl.⁴: **G 03 B 25/02**

(54) **VERIFICATION DEVICE.**

(30) Priority: **11.05.81 US 262120**

(43) Date of publication of application:
**11.05.83 Bulletin 83/19**

(45) Publication of the grant of the patent:
**06.07.88 Bulletin 88/27**

(84) Designated Contracting States:
**AT BE CH DE FR GB LI NL SE**

(56) References cited:
**US-A-1 475 430
US-A-3 264 164
US-A-3 284 208
US-A-3 312 006
US-A-3 318 220
US-A-3 412 493
US-A-3 538 632
US-A-3 686 781
US-A-3 734 737
US-A-3 884 554
US-A-4 011 435
US-A-4 034 555
US-A-4 076 384
US-A-4 204 638**

(73) Proprietor: **POLAROID CORPORATION
549 Technology Square
Cambridge, Massachusetts 02139 (US)**

(72) Inventor: **SULLIVAN, Paul Francis
139 Green Hill Road
Westwood, MA 02090 (US)**

(74) Representative: **Lawrence, Peter Robin
Broughton et al
GILL JENNINGS & EVERY 53-64 Chancery Lane
London WC2A 1HN (GB)**

Courier Press, Leamington Spa, England.

## Description

Manufacturers of brand name products spend considerable effort and investment in establishing the reputation of such brand names with consumers. However, the established appeal of these brand names falls easy prey to counterfeiters who distribute their own products under fraudulent brand name labels. The "fraud industry" of brand name pirates is a nagging plague to consumer goods manufacturers that annually represents lost revenues amounting to hundreds of millions of dollars. The thriving fraud industry has invaded almost every segment of the market place, including the records and tapes of the music industry, fashion wear, designer jeans, jewelry, beverages, cosmetics, and others.

Policing one's products in the market place is an enormous and complex task that thus far has eluded effective solution. Ideally, the brand name owner would like to rely on the discriminating eye of the consumer to distinguish his product from the counterfeit item; but, pirates have become so sophisticated in duplicating labels, designs, and general appearances of products that casual detection often is nearly impossible.

Various optical devices that give different patterns according to the position of viewing are well known. See for instance U.S. 1,475,430, 3,312,006, 3,412,493, 3,538,632, 3,264,164, 4,204,638, 4,011,435 and 4,034,555. However none of these describe verification devices that meet present requirements.

A verification device according to the invention comprises a transparent lenticular sheet having parallel rows of lenticules and is characterised in that the rows, in background areas of the sheet, are positioned regularly and, in image areas of the sheet, segments within the rows are shifted out of the regular positioning to form a predetermined pattern of irregularly positioned lenticules in the background areas, and the device includes an array of parallel coloured lines positioned opposite and in register with the parallel rows of lenticules, and the lines and lenticules are positioned to provide predetermined and observable optical effects changeable as a function of viewing angle.

The subject verification device generally comprises a transparent lenticular sheet material having a patterned arrangement of lenticules comprising regularly and irregularly positioned parallel rows of lenticules, the lenticules being in perfect registration with an array of parallel colored lines positioned opposite the lenticules. To provide the essential predetermined optical effect, regularly positioned rows of the lenticular surface are interrupted by row segments having lenticules (and corresponding colored lines) shifted from their regular position (e.g., creating patterns of irregular lenticular segments including rows closer together or farther apart). Depending on the particular arrangement of lenticules, the resulting device displays various optical effects, such as disappearing and reappearing images and flashing color changes wherein images and background areas of the display change coloration in different complementary sequences.

The selectively patterned lenticular sheets, as are employed in the present device, may be prepared by any of the conventional procedures well known for producing lenticular sheets. Specifically, a web of polymeric film base may be continuously, contacted with a specially engraved rotating embossing roller, featuring the predetermined arrangement of regular and shifted, irregular positioned grooves according to the present invention, under appropriate conditions of temperature, pressure, and/or solvents to provide lenticules of the size and shape desired. The frequency of the lenticule rows can range widely; it is preferred, however, to employ sheets with lenticule frequency ranging from about 500 rows per inch (20 rows per mm) to about 2000 rows per inch (80 rows per mm). Row frequency of about 1500 per inch (60 per mm) is particularly preferred.

The colored lines in perfect registration with the parallel rows of lenticules can be formed, for example, using the process described in U.S. Patent No. 3,284,208 issued November 8, 1966 to Edwin H. Land. This patent discloses a process for preparing photographic multicolor screen elements exhibiting a high degree of optical acuity and particularly adapted for use in additive multicolor photographic processes, both conventional and diffusion transfer types, by successively coating on the smooth or flat surface of a regularly spaced lenticular film a plurality of photoresponsive layers. Each photoresponsive layer is subjected to exposure radiation incident on the lenticular film at angles adapted to provide exposed areas of the coating contiguous each lenticule. The unexposed areas of the coating are then removed and the exposed areas dyed to provide a series of chromatic filter elements. The indicent radiation employed to effect exposure of successsive photoresponsive layers is directed so as to provide formation of each series of chromatic filter element in substantial side-by-side or screen relationship on the smooth surface of the lenticular film.

The technical article by Edwin H. Land entitled "An Introduction to Polavision" published in Photographic Science and Engineering, vol. 21, pages 225-236 (1977), and U.S. Patent 3,734,737 to John R. Sharp describes and illustrates how the process of the above Land patent can be used to produce microscopically fine, regular multicolor stripes with great precision by the following steps (1) embossing a film base to form fine lenticules; (2) exposing a light-sensitive layer of dichromated gelatin on the opposite side of the base through the lenticules to form line images; (3) washing away the unexposed gelatin; and, (4) dyeing the lines that remain. The process is repeated to complete an ultrafine array of alternating color stripes in the pattern red, green, blue, red, green, blue, and so forth.

The subject verification device may comprise a lenticular sheet having an array of different color (e.g., red, green, and blue) stripes in registration therewith, or a single color stripe may be employed. The number of separate stripes aligned behind each lenticule generally may range from one up to 100, depending on the frequency of lenticule rows per inch. The width of each stripe and the spacing between stripes can be varied; all the stripes behind each lenticule or behind separate lenticules need not be the same width; if a single stripe is used, its width may range up to as wide as the entire space behind the lenticule. If desired, colored lines can be omitted behind selected sections or rows of lenticules. The selection of stripe width and coloration is governed only by the particular optical effect sought to be achieved. Additional color stripes introduce additional verifiable optical effects and accompanying complexity of manufacture to enhance security. For purposes of illustration, however, a device using a single color (e.g., red) stripe has been chosen for more detailed discussion below.

The invention may be further understood by reference to the figures in which:

Fig. 1 is a frontal view of a verification device according to the present invention;

Fig. 2 is a schematic representation of a lenticular sheet having parallel lenticules on one side thereof and colored lines in registration therewith on the opposite side thereof;

Fig. 3 is a schematic representation of a lenticular sheet having irregularly spaced parallel lenticules on one side and corresponding colored lines in registration therewith on the opposite side thereof; and,

Fig. 4 is a diagram illustrating coloration effects of a device according to the present invention observed by a viewer at various viewing angles.

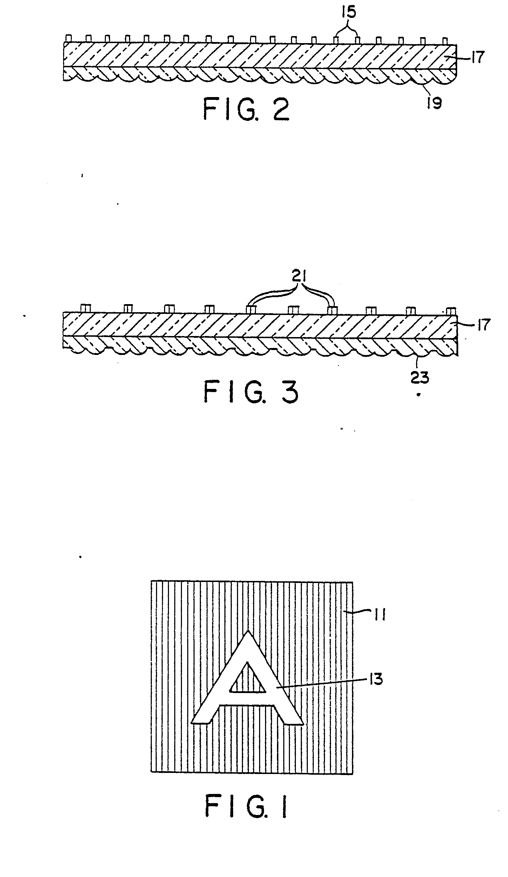

A basic embodiment of a verification device according to the present invention is shown in Fig. 1. The illustration is a frontal view looking through the lenticular surface of a transparent sheet to a red-lined array in registration with the lenticules. The transparent sheet is shown viewed against a white surface so that white spacing appears between the lines of the red array. The background portion 11 of the device comprises a series of parallel, equally spaced lenticules; the image portion 13 of the device comprises a series of parallel lenticules having alternate rows of lenticules shifted from its regularly spaced position so that each row of lenticules is not equally spaced from its two adjacent lines. The verification device rapidly changes color as it is viewed from various angles about an axis parallel with the lenticular rows. Because of the differences in lenticule and corresponding color line spacing, the optical effects of the image vary in a sequence different than that of the background. In the Figure, the display is shown viewed at an angle so that the image 13 appears in its white sequence against the background 11 in its red sequence. Figs. 2 and 3 depict the lenticule and colored line relationships of the background and image areas respectively, as shown in Fig. 1. In the background area of the optical display, shown in Fig. 2, red-colored lines 15 are positioned on one side of sheet 17 in perfect registration with equally spaced parallel lenticules 19. The image area, shown in Fig. 3, also includes colored lines 21 on one side of sheet 17 in registration with corresponding lenticules 23. However, while each of lenticules 23 are in parallel disposition relative to one another, the position of alternate rows of lenticules is shifted so that the spacing of each lenticule row from its two adjacent lenticule rows is not equidistant, in contrast to the equal spacing of the background area lenticules (Fig. 2).

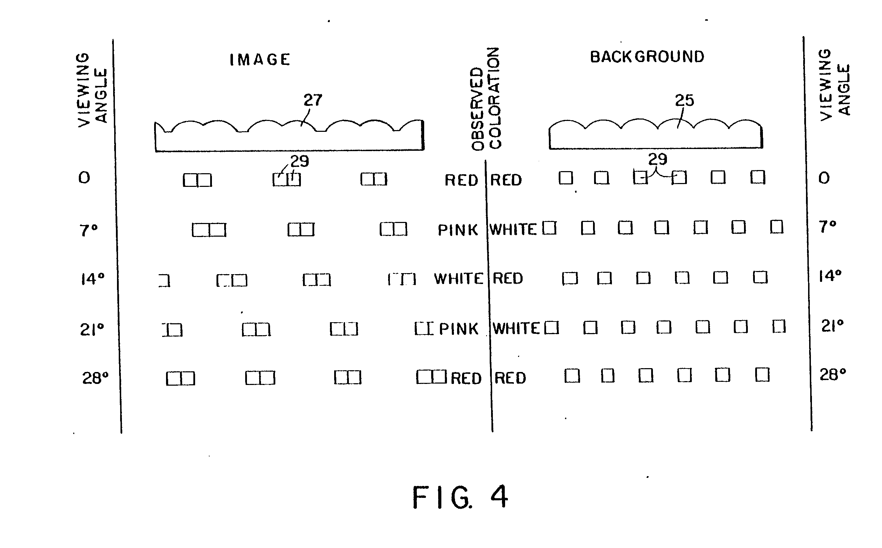

The observable coloration effects of a verification device having a regularly spaced lenticular background arrangement 25, as described above, interrupted by an irregularly spaced image lenticular arrangement 27, as described above, is illustrated by the diagram of Fig. 4. Although the colored lines may be any single color or a combination of colors, for purposes of illustration, the described coloration effects represent a verification device wherein red-colored lines 29 are positioned in registry with the lenticules. The device may be viewed by transmitted light, or by reflected light if the device is set against an opaque background. As described in Fig. 4, the transparent sheet is viewed against a white surface. To provide coloration between the colored lines and/or to alter the observed coloration of the lines, the device may be viewed against various other colored surfaces. The relative position of the red lines beneath the lenticules and the resultant coloration observed at viewing angles progressing from a position normal (perpendicular) to the display surface (0°) is shown by the successively viewed coloration moving down the diagram. The angles shown indicate degrees of viewing angle varying from normal towards a position parallel with the viewed surface. Optical effects vary with the frequency of lenticule rows and the thickness of the sheet. The color changes shown in the figure represent the change cycle obtained with a .0762 mm thick sheet having lenticules engraved at a frequency of 1500 per inch (60 per mm).

At a normal viewing angle, the background appears red, as the red lines directly behind each row of lenticules are viewed. As the angle of viewing is progressively altered, the background coloration switches from red to white to red to white, depending on whether the red lines area or the white interspacing between the lines is being viewed through the lenticules. Because of the shifted position of the lenticules in the image area, the observed coloration of the image at the various angles of viewing differs from that of the background. At 0°, the image coloration is red, as the red lines in registration with the lenticules are viewed. However, a transitional pink color stage also is introduced into the sequence between red and white. Since the lenticules and corresponding red lines are alternately shifted and, therefore, not equally spaced from adjacent lenticules and lines, at certain viewing angles, while red lines are viewed through some lenticules, white interspacing is viewed through others, resulting in an observed pink coloration. With the additional color stage and cycle alteration, image on background color effects switch from red on red (image disappears) to pink on white to white on red to pink on white back to red on red, and so on. An appealing and effective flashing color display is thus presented.

The image area of the device can be modified to display any fanciful or ordered pattern. For example, the image may take the form of an alphabetical, numerical, floral, or fanciful pattern. An official design or logo, or a name or phrase, readily could be employed. The verification device is very versatile and could be used on a product in any common manner, such as in the form of a label, a sticker, or a hang tag. It could be used alone; or, taking advantage of its transparency, it could be made part of a composite tag or label, such as an overlay over a standard tag or label. To prevent wear or abrasion of the device's fine array of colored lines, it is preferred to provide a protective coating over the exposed array surface. Typically, a coating of a clear, transparent polymeric material is used. Vinylidene chloride polymers or copolymers are preferred materials.

The optical effects of the described device accommodate ready verification using either macroscopic or microscopic modes of detection. Since the coloration and image effects are observable by the naked eye, a consumer has a convenient means of checking the authenticity of an article by viewing its characteristic display. Microscopically, a policing authority simply can count the predetermined lenticule frequency and/ or the pattern of shifted rows of lenticules to determine the validity of a device.

In an alternative embodiment of the verification device, the patterned lenticular sheet and the mating array of colored lines may be separate elements. Using such an arrangement, for example, either element, set on a suitable support sheet, may be used on a product in the form of a label, sticker, tag, or transparent overlay, etc., as previously described. Microscopically, either element may be verified as previously described; macroscopically, to verify the authenticity of an article, one simply needs to mate the corresponding elements (i.e., superpose the lenticular sheet in registry over the colored line array to observe the characteristic pattern of optical effects). If the colored lines or lenticular sheet did not match, a wavy moire pattern would be seen instead of the verifying pattern.

For purposes of illustration, the verification device has been shown using a red lined array. Additional colored lines can be introduced to create faster changing, more variable optical effects which may be used to further enhance security. Yet another element of security may be introduced through use of select dyes having unique properties in forming the colored line array. For example, the dyes used may comprise one or more infrared active materials whose activity then can be detected to confirm authenticity.

In the image area, the frequency of lenticule row position shifting can be modified to provide a wide variety of optical effects. The preferred frequency of shifted rows in the image pattern ranges from shifting segments of each row to row shifting in about every seventh row. In the embodiment wherein the lenticular sheet and colored line array form a unitary device, alternate row shifting provides an effective display and is particularly preferred. Where the lenticular sheet and colored line array are separate elements, shifting of each lenticular row in the image pattern provides a particularly preferred optical display. Unique optical effects also can be obtained with combinations of row shifting patterns.

## Claims

1. A verification device comprising a transparent lenticular sheet having parallel rows of lenticules characterised in that the rows, in background areas (11) of the sheet, are positioned regularly and, in image areas (13) of the sheet, segments within the rows are shifted out of the regular positioning to form a predetermined pattern of irregularly positioned lenticules in the background areas (11), and the device includes an array of parallel coloured lines positioned opposite and in register with the parallel row of lenticules and the lines and lenticules are positioned to provide predetermined and observable optical effects changeable as a function of viewing angle.

2. A device according to claim 1 characterised in that the frequency of the rows is from about 197 to 787, preferably about 590, rows per centimetre.

3. A device according to claim 1 or claim 2 characterised in that the irregularly positioned rows form an ordered pattern of image areas (13) surrounded by background areas (11) of regularly positioned rows of lenticules, the pattern preferably being of an official design or logo.

4. A device according to any preceding claim characterised in that the irregularly positioned rows in the image areas (13) appear in a frequency ranging from every row to every seventh row of lenticules, preferably in every row or every alternate row of lenticules.

5. A device according to any preceding claim in which the coloured lines are single-coloured lines and are red, green or blue, or combinations thereof, preferably red.

6. A device according to claim 5 characterised in that the device includes a single red line aligned in register with each row of lenticules.

7. A device according to any preceding claim in which the coloured lines comprise an infra red active material.

8. A device according to any preceding claim

7        0 078 320        8

characterised in that the device is a unitary structure comprising a lenticular sheet having the coloured lines on one surface and the rows of lenticules on the other surface, the rows in the predetermined pattern having row segments preferably shifted in every alternate row.

9. A device according to any preceding claim in which the device comprises a separate lenticular sheet and a separate coloured line array, the rows in the predetermined pattern having row segments preferably shifted in every row.

10. A device according to any preceding claim including a protective coating, preferably of a vinylidene chloride polymer or copolymer, over the coloured lines.

11. A device according to any preceding claim including an opaque material mounted opposite the lenticular surface so that the device may be viewed by reflected light.

**Patentansprüche**

I. Verifikationsvorrichtung mit einer transparenten Linsenplatte mit parallelen Linsenreihen, dadurch gekennzeichnet, daß die Reihen in Hintergrundbereichen (11) der Platte regelmäßig angeordnet sind, wogegen in Bildbereichen (13) der Platte innerhalb der Reihen Abschnitte aus der regelmäßigen Anordnung verlagert sind, um ein vorbestimmtes Muster von unregelmäßig angeordneten Linsen in den Hintergrundbereichen (11) zu bilden, und daß die Vorrichtung eine Schar von parallelen Farblinien aufweist, die den parallelen Linsenreihen gegenüberliegen und mit diesen fluchten, wobei die Linien und Linsen so angeordnet sind, daß sie vorbestimmte und beobachtbare optische Effekte schaffen, die sich in Abhängigkeit vom Betrachtungswinkel ändern.

2. Vorrichtung nach Anspruch 1, dadurch gekennzeichnet, daß die Dichte der Reihen von 197 bis 787 Reihen/cm, vorzugsweise 590 Reihen/cm beträgt.

3. Vorrichtung nach Anspruch 1 oder 2, dadurch gekennzeichnet, daß die unregelmäßig angeordneten Reihen ein geordnetes Muster von Bildbereichen (13) bilden, die von Hintergrundbereichen (11) aus regelmäßig angeordneten Linsenreihen umgeben sind, wobei das Muster vorzugsweise aus einem offiziellen Zeichen oder einem Merkzeichen besteht.

4. Vorrichtung nach einem der vorhergehenden Ansprüche, dadurch gekennzeichnet, daß die unregelmäßig angeordneten Reihen in den Bildbereichen (13) eine Dichte aufweisen, die sich von jeder Linsenreihe bis zu jeder siebenten Linsenreihe ändert, vorzugsweise in jeder Linsenreihe oder jeder zweiten Linsenreihe.

5. Vorrichtung nach einem der vorhergehenden Ansprüche, dadurch gekennzeichnet, daß die Farblinien einfärbige Linien der Farben Rot, Grün oder Blau oder Kombinationen derselben sind, vorzugsweise Rot.

6. Vorrichtung nach Anspruch 5, dadurch gekennzeichnet, daß sie, ausgerichtet auf jede Linsenreihe, eine einzige rote Linie aufweist.

7. Vorrichtung nach einem der vorhergehenden Ansprüche, dadurch gekennzeichnet, daß die Farblinien ein infrarotaktives Material aufweisen.

8. Vorrichtung nach einem der vorhergehenden Ansprüche, dadurch gekennzeichnet, daß sie eine einheitliche Struktur hat, die eine Linsenplatte mit Farblinien auf einer Seite und Linsenreihen auf der anderen Seite aufweist, wobei die Reihen in dem vorbestimmten Muster Reihenabschnitte haben, die vorzugsweise in jeder zweiten Reihe verlagert sind.

9. Vorrichtung nach einem der vorhergehenden Ansprüche, dadurch gekennzeichnet, daß sie eine gesonderte Linsenplatte und eine gesonderte Farblinienschar aufweist, wobei die Reihen in dem vorbestimmten Muster Reihenabschnitte haben, die vorzugsweise in jeder Reihe verlagert sind.

10. Vorrichtung nach einem der vorhergehenden Ansprüche, dadurch gekennzeichnet, daß ein die Farblinien überdeckender Schutzüberzug, vorzugsweise aus einem Vinylidenchloridpolymer oder -copolymer, vorgesehen ist.

11. Vorrichtung nach einem der vorhergehenden Ansprüche, dadurch gekennzeichnet, daß gegenüber der Linsenoberfläche ein opakes Material aufgebracht ist, so daß die Vorrichtung bei reflektiertem Licht betrachtet werden kann.

**Revendications**

1. Dispositif de vérification comprenant une feuille transparente gaufrée comportant des rangées parallèles de lentilles, caractérisé en ce que les rangées, dans les zones de fond (11) de la feuille, sont disposées régulièrement et, dans les zones d'image (13) de la feuille, des segments, au sein des rangées, sont décalés par rapport à la position régulière pour former un dessin prédéterminé de lentilles disposées irrégulièrement dans les zones de fond (11), et le dispositif contient un réseau de lignes colorées parallèles disposées en regard et en coïncidence avec la rangée parallèle de lentilles, et les lignes et les lentilles sont disposées de manière à donner des effets optiques prédéterminés et observables, modifiables en fonction de l'angle d'observation.

2. Dispositif selon la revendication 1, caractérisé en ce que la fréquence des rangées est d'environ 197 à 787, de préférence d'environ 590, rangées par cm.

3. Dispositif selon la revendication 1 ou 2, caractérisé en ce que les rangées disposées irrégulièrement forment un dessin ordonné de zones d'image (13) entourées par des zones de fond (11) de rangées, disposées régulièrement, de lentilles, le dessin étant de préférence un dessin ou un logo officiel.

4. Dispositif selon l'une quelconque des revendications précédentes, caractérisé en ce que les rangées disposées irrégulièrement, dans les zones d'image (13), apparaissent selon une fréquence allant de "chaque rangée" à "une rangée sur sept" de lentilles, de préférence à "chaque rangée", ou à "une rangée sur deux", de lentilles.

5

5. Dispositif selon l'une quelconque des revendications précédentes, dans lequel les lignes colorées sont des lignes d'une seule couleur et sont rouges, vertes ou bleues, ou une de leurs combinaisons, et de préférence rouges.

6. Dispositif selon la revendication 5, caractérisé en ce que le dispositif contient une seule ligne rouge alignée en coïncidence avec chaque rangée de lentilles.

7. Dispositif selon l'une quelconque des revendications précédentes, dans lequel les lignes colorées comprennent une substance active dans l'infrarouge.

8. Dispositif selon l'une quelconque des revendications précédentes, caractérisé en ce que le dispositif est une structure unitaire comprenant une feuille gaufrée comportant les lignes colorées sur une face et les rangées de lentilles sur l'autre face, les rangées contenues dans le dessin prédéterminé ayant des segments de rangée de préférence décalés à "une rangée sur deux".

9. Dispositif selon l'une quelconque des revendications précédentes, dans lequel le dispositif comprend une feuille gaufrée séparée et un réseau de lignes colorées séparé, les rangées contenues dans le dessin prédéterminé ayant des segments de rangée de préférence décalés à "chaque rangée".

10. Dispositif selon l'une quelconque des revendications précédentes, comprenant un revêtement protecteur, de préférence d'un polymère ou copolymère de chlorure de vinylidène par-dessus les lignes colorées.

11. Dispositif selon l'une quelconque des revendications précédentes, comprenant un matériau opaque monté à l'opposé de la surface gaufrée, de sorte que le dispositif puisse être observé par une lumière réfléchie.

FIG. 2

FIG. 3

FIG. I

## FIG. 4

VIEWING ANGLE: 0, 7°, 14°, 21°, 28°

BACKGROUND — 25, 29

OBSERVED COLORATION

| VIEWING ANGLE | OBSERVED COLORATION |
|---|---|
| 0 | RED \| RED |
| 7° | PINK \| WHITE |
| 14° | WHITE \| RED |
| 21° | PINK \| WHITE |
| 28° | RED \| RED |

IMAGE — 27, 29

VIEWING ANGLE: 0, 7°, 14°, 21°, 28°

1